# EUROPEAN PATENT SPECIFICATION

(11) **EP 3 390 729 B1**
(45) Date of publication and mention of the grant of the patent: **20.09.2023**
(21) Application number: 16815549.7
(22) Date of filing: 25.11.2016
(51) Int. Cl.: E02D 27/42

(54) **WIND TURBINE FOUNDATION**
GRÜNDUNG FÜR EINE WINDKRAFTANLAGE
FONDATION D' UNE AÉOLIENNE

(30) Priority: 17.12.2015 DK 201570828
(43) Date of publication of application: 24.10.2018
(73) Proprietor: Vestas Wind Systems A/S, 8200 Aarhus N (DK)
(72) Inventor: BROHM, Anders, 8000 Aarhus C (DK); JENSEN, Søren P., 6800 Varde (DK); LYNGSØ, Casper, 8240 Risskov (DK)
(74) Representative: Vestas Patents Department
(86) International application number: PCT/DK2016/050396
(87) International publication number: WO 2017/101940

(56) References cited:
- WO-A2-2008/052557
- WO-A2-2011/095729
- CN-A- 109 630 364
- DE-A1-102010 047 773
- KR-A- 20160 030 882

## Description

### FIELD OF THE INVENTION

The present invention relates to a foundation system for an onshore wind turbine, and a method of creating a foundation for an onshore wind turbine to be placed at an onshore site.

### BACKGROUND

Wind turbines, by their nature, are very tall slender structures giving cause to a number of issues when considering and dimensioning the structural design of the foundation of a wind turbine. A foundation for a conventional engineering structure is traditionally designed mainly to transfer the vertical load (dead weight) to the ground. However, in the case of wind turbines, due to potentially high winds from different and changing directions, and due to the dynamics of the rotor, significant horizontal and dynamic load needs to be appropriately restrained. These loads cause large moment loads to be transferred to the foundation of a wind turbine in addition to the weight of the tower, nacelle and rotor, which need to be restrained properly in order for the wind turbine to stay erect and vertical. As the wind turbines are generally increasing in size, the sizes and thereby material use and costs of the foundations as well as time and cost for the preparation of the foundation (excavation work etc.) become issues of increased concern.

Different types of foundations exist for onshore wind turbines such as slab foundations as for example known from WO 2011/095729 A, but also piled foundations, or combinations hereof.

A slab foundation (also called a spread foundation or a spread footing foundation) is a foundation which comprises a bottom plate or slab of a relatively large cross-sectional area for spreading the loads to the ground. The slab may attain different geometries such as for example cylindrical, rectangular, a polygon (e.g. octagonal), tapered, or a so-called beam-slab type foundation. The construction material is most often reinforced concrete. Generally speaking, the bigger the bottom area is, the smaller the pressure becomes on the soil underneath. Further, the weight and the width of the slab has to be sufficient large to prevent the tower from turning over both during extreme wind events as well as over time because of the dynamic loading. The dimensioning and placing of the slab hereby depends highly on wind turbine vertical load and self-weight of the foundation and any backfilling, the tower overturning moment, and the wind turbine dynamics, but is also crucially dependent on the soil properties. Both the settlements of the soil as well as the differential settlements need be kept low to ensure the tower remains vertical.

The soil properties can be improved and the settlements reduced by for example different compaction or densification methods (for example by preloading or vibration methods) and methods of soil reinforcement through the introduction of additional material into the ground such as the permeation grouting method or the jet-grouting method which uses column-like structures made of soil-grout mixture to reinforce the soil. Alternatively or additionally, the foundation can be strengthened by the installation of piles to transfer the loads to better soil at a greater depth in the ground. These methods, however, all requires extensive excavation and soil preparation work, increasing the cost of erecting a wind turbine considerably.

Further, the groundwater plays an important role in the placing and dimensioning of onshore wind turbine foundations. For many geographical sites, simply placing the foundation level above the groundwater level is not possible as the groundwater level may always or potentially at some times be relatively high. During the operation of the wind turbine, the loadings will cause the slab foundation to slightly tilt back and forth causing alternating gapping and compression especially at opposite peripheral portions of the slab. If water (or any other fluid) is present at the foundation level during operation of the wind turbine, the water will be forcedly pressurized and de-pressurized by the slab movements. This has been seen to result in a transport of soil or soil washout away from the underside and especially near the periphery of the slab leading to gradual destabilization of the foundation. The soil washout is believed to be caused in part by a liquefaction of the material caused by the pressure build-up by the water.

These problems are traditionally avoided by increasing the diameter or cross-sectional area of the bottom of the slab, or by increasing the overall self-weight of the foundation in order to reduce or more or less remove any gapping during the operation of the wind turbine. This simple solution, however, increases the material use as well as the excavation and manufacturing costs for the slab foundation considerably.

### DESCRIPTION OF THE INVENTION

It is therefore an object of embodiments of the present invention to overcome or at least reduce some or all of the above described disadvantages of the known foundation systems for onshore wind turbines by providing a foundation system yielding improved stability properties over time for the wind turbine.

It is a further object of embodiments of the invention to provide a foundation system with reduced material use.

It is yet a further object of embodiments of the invention to provide a foundation system for an onshore wind turbine with reduced risk of soil washout from underneath the foundation.

Yet a further object of embodiments of the invention is to provide a foundation system for an onshore wind turbine which is well suited for sites regardless of the groundwater level at that site and which is capable of withstanding any occasional presence of groundwater above the foundation level.

A further object of embodiments of the invention is to provide a method of preparing a foundation for an onshore wind turbine which is simple and relatively fast to conduct yet effective.

In accordance with the invention this is obtained by a foundation system for the foundation of a wind turbine at an onshore site, the wind turbine comprising a nacelle and a rotor supported by a tower, the foundation system comprising
- a slab foundation configured for supporting the tower, the nacelle, and the rotor, the slab foundation having a cross sectional area in a horizontal plane larger than a cross sectional area of the tower, and being placed at an excavation level,
- a drainage layer of a first drainage material, the drainage layer extending underneath the slab foundation such as to allow any groundwater to permeate through the layer, the drainage layer comprising a peripheral portion extending along a periphery of the drainage layer,
- a reservoir volume of a second drainage material, the reservoir volume being placed in fluid communication with at least a part of the peripheral portion of the drainage layer to allow a fluid flow of any groundwater between the drainage layer and the reservoir volume.

Hereby is obtained that the width of the slab foundation and/or the weight of the foundation can be reduced considerably while maintaining or even improving the stability of the foundation for the wind turbine. This is obtained because of the presence and positions of the drainage layer and the reservoir volume with a fluid communication in between which ensures a volume in which any groundwater can flow back and forth. This is especially advantageous during operation of the wind turbine where the loadings will cause the slab foundation to slightly tilt back and forth. Because of the drainage layer underneath the slab and reservoir volume near the periphery of the drainage layer, the groundwater can travel back and forth with no or only minimal pressure build-up and thereby with correspondingly no or minimal liquefaction, soil washout, and resulting transport of soil away from underneath the slab foundation. This in turn provides for larger acceptable angular deflections of the slab foundation (also referred to as a gapping) during turbine operation. Hereby the width of the slab foundation and/or the weight of the foundation can be reduced correspondingly. Because of the often considerable dimensions of onshore wind turbine foundations (with slab diameters up to 20 meters or more) even a relatively small reduction in the width of the slab yields a large reduction in material use for the foundation and costs.

The positioning of the reservoir volume in fluid communication with at least a part of the peripheral portion of the drainage layer advantageously provides for the additional volume of a drainage material in proximity of the periphery of drainage layer and thereby near the outer sides or periphery of the slab foundation where the alternating gapping and compression and tilting movements of the slab foundation are the largest.

In one case, the inventors found that a foundation system according to the invention could reduce the diameter of a cylindrical slab foundation with 0.5-1 meter for a slab foundation of about 18-22 meters.

The foundation system according to the invention is especially advantageous at onshore sites where the groundwater level or groundwater table is relatively high. For example if the groundwater is always or periodically or at times higher than the excavation level or higher up than the underside of the slab foundation. The level of the groundwater generally changes some during the year. In a design phase, the groundwater level or the groundwater table is traditionally understood as the worst case - i.e. the highest level throughout a year.

The foundation system according to the invention may also function fine at sites with no groundwater in the drainage layer or reservoir volume. In this way the foundation system may advantageously be used at onshore sites with low groundwater level in this way being prepared for a potential future rise of the groundwater level or being dimensioned for any occasional presence of water.

As also mentioned previously, a slab foundation (also referred to as a spread foundation or a spread footing foundation) comprises a wider bottom portion or slab than the structure it supports. This wider slab acts to spreads the weight of the structure over a larger area for increased stability. The slab may attain different geometries such as for example cylindrical, rectangular, a polygon (e.g. octagonal), tapered, or a so-called beam-slab type foundation. A slab with an approximately circular cross-sectional area may be advantageous in equally transferring loadings from all wind directions. The slab foundation is typically made of reinforced concrete and may be pre-manufactured or cast at the site.

Most often, a slab foundation is footed some distance down in the soil. According to the invention, the slab foundation is placed on top of the drainage layer at an excavation level. One or more layers of other materials may optionally be placed between the drainage layer and the slab foundation. The excavation level may depend on the soil properties at the site and may traditionally be in the range of 1.5-5 meters. The placing of the slab foundation at an excavation level advantageously provides for the placing the slab foundation on most often more stiff and stronger soil than the top soil, and for a backfilling material above the slab foundation the weight of which adds significantly to the stability of the turbine.

The drainage layer according to the invention extends underneath the slab foundation. The drainage layer may be of approximately uniform thickness or may alternatively have a varying thickness accommodating any unevenness of the soil or ground onto which the drainage layer is placed. The drainage layer may hereby advantageously and additionally be used to level the ground before placing or forming of the slab foundation. The drainage layer may have different cross-sectional geometry in general more or less following the cross sectional geometry of the slab foundation such that at least a part of the peripheral portion of the drainage layer extend along a periphery of the slab foundation. The peripheral portion of the drainage layer comprises the radially outermost part of the drainage layer. For a slab foundation with an approximately circular cross-section, the drainage layer may likewise comprise an approximately circular cross-section with an approximately circular periphery and an approximately circular ring-shaped peripheral portion.

The drainage layer may advantageously have a thickness in the range of 0.05-0.5 meter, such as in the range of 0.1-0.3 meter, such as of approximately 0.15 meter.

The drainage layer is of a first drainage material allowing any groundwater to permeate or flow through the layer such as for example gravel or other material with high grain size and permeability relative to the surrounding soil. Likewise the reservoir volume is of a drainage material allowing any groundwater to permeate or flow through the reservoir volume such as for example gravel or other material with high grain size and permeability relative to the surrounding soil. In general, the grain size of a material reflects the permeability such that a higher permeability can be obtained by using for example gravel with a larger grain size.

The second drainage material may be essentially the same material as the first drainage material. Alternatively, the first and second drainage materials are different materials and/or comprise different mixtures of material. In an embodiment, the first and second drainage materials are of the same type but with different grain size and/or permeability.

Because of the positioning of the reservoir volume in fluid communication with the drainage layer, any groundwater may flow from the drainage layer to the reservoir volume or vice versa.

The reservoir volume may attain different shapes and may for example form a radial extension of the drainage layer of approximately the same or of increased thickness, or may be some sort of ring-shaped (for example approximately circular, octagonal, elliptical, multifaceted, or of free form). The reservoir volume may extend near the entire periphery of the drainage layer and be of approximately uniform or varying cross-sectional area such as of the same or of a varying height. Alternatively, the reservoir volume may comprise a number of sub volumes placed at intervals along an outer periphery of the slab foundation. The reservoir volume may for example be larger at positions corresponding to pre-dominant wind directions thereby advantageously being capable of supporting larger amounts of fluid being forced back and forth during the operation of the turbine.

In an embodiment, the reservoir volume is placed circumferentially to the slab foundation such as to extend a width in a radial direction of at least 0.2 meter. Hereby, the reservoir volume may be formed without the need for a deeper excavation level yet still placed near the periphery of the slab foundation where the largest loadings on the ground due to gapping occur. In an embodiment the reservoir volume extends a radial width in the range of 0.2 - 3 meter, such as in the range of 0.3-0.6 meter.

In an embodiment, the reservoir volume is placed to extend a height up against an outer peripheral side of the slab foundation. The reservoir volume may hereby be without increasing the depth of excavation for the foundation and with only minimal increased excavation to the sides to make room for the reservation volume. By increasing the height of the reservoir volume, the same volume for the reservoir can be obtained at a smaller radial width and thereby reducing the amount of soil to be excavated. Further is obtained, that the reservoir volume can be formed after having placed the slab foundation for example by simply filling up a circumferential gap between the placed slab foundation and the surrounding non-excavated soil. In an embodiment the reservoir volume extends a height up against the slab foundation in the range of 0.2-1.2 meter, such as in the range of 0.4-0.7 meter such as approximately 0.5 meter.

According to a further embodiment, the reservoir volume comprises a ditch at least partly below the drainage layer, the ditch extending at least partly along the peripheral portion of the drainage layer. Hereby, the reservoir volume may be established before forming the drainage layer and prior to placing of the slab foundation. This further allows for the forming of the drainage layer and the reservoir volume in the same working operation. Also, the placing of the reservoir volume below the drainage layer advantageously leads to that the foundation system according to the invention can be prepared without increasing the width of the excavation, so that only the additional soil corresponding to the reservoir volume needs to be removed.

The ditch may attain different cross-sectional shapes such as approximately rectangular, semicircular or the like. The cross-sectional shape may be uniform along the length of the ditch (i.e. along the peripheral portion of the drainage layer) or may be varying for example as a function of the local soil conditions in the excavation.

According to a further embodiment of the invention, the reservoir volume comprises a number of sub volumes placed at intervals along an outer periphery of the slab foundation. In this way the reservoir volumes may be established at the circumferential positions where most needed (for example due to pre-dominant wind directions). Further, the reservoir volumes may for example advantageously be placed as sub volumes in between the fingers or tips of star-shaped slab foundations or a slab foundation with radially extending portions. The intervals may be of equal or of varying lengths.

In an embodiment, the reservoir volume has a volume in the range of 0.04 - 1.5 m³ per meter in a peripheral direction of the slab, such as in the range of 0.1- 1.0 m³ per m, such as around 0.2 - 0.3 m³ per m. I.e. for one meter of circumference of the slab, the reservoir volume attains a volume within the given ranges. Hereby is obtained a sufficiently large reservoir volume to avoid any soil washout from below the slab foundation and yet with minimal need for drainage material. A reservoir volume within the given ranges has proven it possible to reduce the diameter of a cylindrical slab foundation of 18-22 meter by 0.5-1.5 meter for the same wind turbine and site properties. I.e. a considerable reduction of the diameter in the order of about 3-10% can be achieved.

According to the invention, the ratio between the reservoir volume and the volume of the drainage layer is in the range of 1/10 - 2, such as in the range of 1/8 - 1, such as of approximately 1/4 - 1/2. A ratio of approximately 1/3 has been seen to be favorable. That is, the advantages of the foundation system according to the invention can be obtained by only increasing the amount of drainage material in the order of 1/2 -2 times as compared to the foundation system without any reservoir volume.

According to a further embodiment of the invention, the second drainage material has a larger average grain size than the first drainage material. Hereby the permeability and the ability for the groundwater to flow is advantageously further increased in the reservoir volume where the compression and decompression forces during operation of the wind turbine are the largest.

The first and/or second drainage material comprises -according to the invention-sand or gravel (or a combination hereof) with a grain size characterized by a median diameter d₅₀ in the range of 5-40 mm, such as in the range of 10-30 mm, optionally as 15-25 mm. The median diameter d₅₀ is the midpoint of the grain-size distribution: 50% (by weight) of the sediment is coarser and 50% is finer than the median grain size.

Alternatively, the first and/or second drainage material may comprise sand or gravel (or a combination hereof) with 80% of the material of a grain size in the range of 0.01-60 mm, such as in the range of 1.0 - 10 mm, such as in the range of 10-40 mm. Hereby the drainage properties of the drainage layer and the reservoir volume are properly ensured. The grain size distribution may be determined from e.g. ISO 14688-1:2002, establishing the basic principles for the identification and classification of soils, or from DS 436:1993 (Danish Standards), and may be determined as an average grain size in the material mixture.

The foundation system may further comprise a backfilling volume at least partially filling up the excavation above and around the slab foundation. The backfilling material hereby adds significantly to the stability of the turbine. The backfilling material may comprise the previously de-excavated soil, or may comprise another preferably more heavy material or combinations hereof.

In an embodiment a blinding layer is formed in between the drainage layer and the slab foundation. The blinding layer may comprise a low strength concrete advantageously providing a firm ground for a construction of the slab foundation. The blinding layer has no or minimal structural influence and may be considered as 'soil' in the structural analyses of the foundation system.

A further aspect of the invention relates to a method of making a foundation for a wind turbine to be placed at an onshore site, the wind turbine comprising a nacelle and a rotor supported by a tower, and the method comprising
- removing the soil down to an excavation level below the groundwater level at the site;
- forming a drainage layer of a first drainage material at the excavation level, the drainage layer having a permeability higher than the soil at the excavation level, such as to allow any groundwater to permeate through the drainage layer, the drainage layer comprising a peripheral portion extending along a periphery of the drainage layer;
- placing a slab foundation configured for supporting the tower and the nacelle;
- forming a reservoir volume of a second drainage material, the reservoir volume being placed in fluid communication with at least a part of the peripheral portion of the drainage layer to allow a fluid flow of any groundwater between the drainage layer and the reservoir volume; and
- backfilling the excavation above and around the base of the slab foundation.

Advantages hereof are as described in the above in relation to the foundation system.

The placing of the slab foundation may comprise positioning a pre-fabricated slab foundation or casting the slab foundation on site.

The forming of the reservoir volume may be performed after placing the slab foundation or alternatively before placing the slab foundation and before forming the drainage layer. The method may further comprise re-using the soil first excavated in the backfilling of the excavation.

### BRIEF DESCRIPTION OF THE DRAWINGS

In the following different embodiments of the invention will be described with reference to the drawings, wherein:
Fig. 1 A and B shows a sketch of a wind turbine supported by a slab foundation as seen in a side view and from the front, respectively,
Fig. 2 is a sketch of a foundation system for a wind turbine according to prior art and in a cross-sectional view,
Fig. 3 is a sketch of a foundation system for a wind turbine according to an embodiment of the invention and in a cross-sectional view,
Fig. 4 comprises a number of sketches showing in cross-sectional views different foundation systems for a wind turbine according to embodiments of the invention, and
Fig. 5 illustrates an embodiment of a foundation system according to an embodiment of the invention and as seen from above.

### DETAILED DESCRIPTION

Further scope of applicability of the present invention will become apparent from the following detailed description and specific examples.

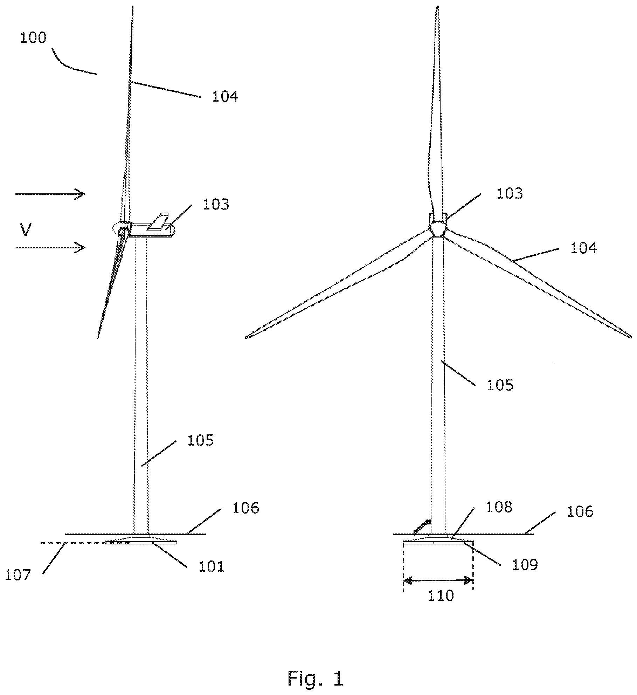

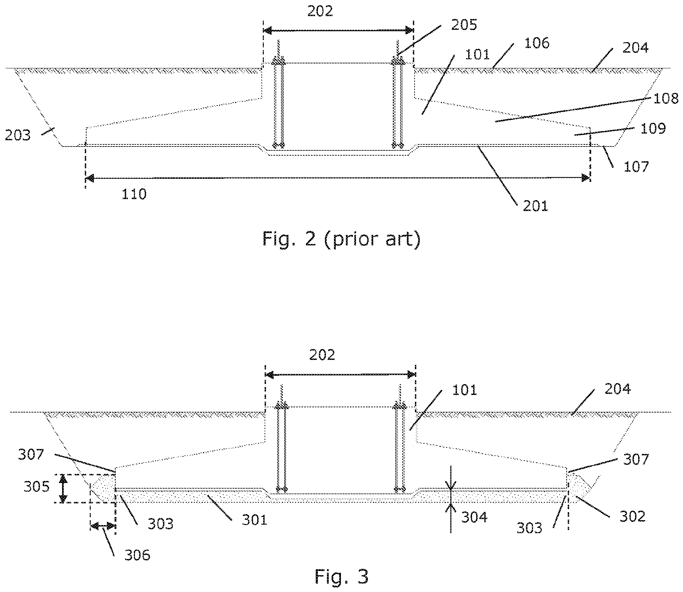

Figure 1 A and B shows a sketch of an on-shore wind turbine 100 supported by a slab foundation 101 as seen in a side view and from the front, respectively. The wind turbine 100 comprises a nacelle 103 and a rotor 104 as supported by a tower 105. The tower 105 is connected to a foundation which is slab foundation type (also called a spread foundation or a spread footing foundation). The cross sectional area of the slab foundation 101 in a horizontal plane is larger than a cross sectional area of the tower 105. The slab foundation is positioned below the ground surface (indicated as 106) at an excavation level 107. The slab foundation in figures 1 A and B is cylindrical about the tower axis and comprises a tapered part 108 ( more clearly seen in figures 2 and 3) downwards to the lowermost slab 109 with the largest diameter 110. Gapping occur when the wind forces cause the tower to sway back and forth thereby causing tilting movements of the slab if not prevented by the size and weight by the slab foundation.

Figure 2 is a sketch of a foundation system for an on-shore wind turbine 100 according to prior art and as seen in a cross-sectional view. The slab foundation has a diameter or width 110 considerably larger than the tower diameter 202. The surrounding lines 203 indicate the excavation down to the excavation level 107 where the slab foundation 101 is placed. A backfilling material 204 is thereafter added on top of and around the slab foundation. The slab foundation may be prepared for connection of the tower (not shown) typically by a number of anchors 205. Traditionally, the slab foundation is placed directly on the soil or optionally on a thin blinding layer 201 of a low strength concrete material and providing a firm ground for the construction of the slab foundation. The blinding layer has no or minimal structural influence and is typically considered as 'soil' in the structural analyses of the foundation system.

Figure 3 is a sketch of a foundation system 300 for a wind turbine according to an embodiment of the invention as seen in a cross-sectional view. In comparison to the foundation system according to prior art (figure 2), the foundation system 300 here comprises a drainage layer 301 of a first drainage material and extending underneath the slab foundation 101 and such that any groundwater can permeate through the layer. The drainage layer 301 has a height 304. The drainage layer 301 comprises a peripheral portion 303 extending along the periphery of the drainage layer. The foundation system 300 further comprises a reservoir volume 302 of a second drainage material. The reservoir volume 302 is placed in fluid communication with at least a part of the peripheral portion 303 of the drainage layer 301. In this way is allowed a fluid flow of any groundwater between the drainage layer 301 and the reservoir volume 302. In some embodiments, the reservoir volume 302 has a height 305 of at least 0.1 m more than the height of the drainage layer 304, such as more than 0.2 m or more than 0.3, or even more than 0.4 or 0.5 m. The height of the reservoir volume may not be constant, but will in that case be understood as the average height. Similarly, the drainage layer height may not be constant but will be understood as the average height. Similarly, the radial extension 306 of the reservoir volume may not be constant but will be understood as the average extension.

This possibility for the groundwater to travel back and forth in the drainage layer and in the reservoir volume reduces or prevents any pressure build-up during wind turbine operation as otherwise experienced especially in the regions underneath and near the periphery of the slab foundation. Hereby the liquefaction and soil wash-out and thereby gradual destabilization of the wind turbine foundation is prevented. This in turn allows for a reduction of the size and/or weight of the slab foundation (and as illustrated by a comparison of the diameter 110 of the slab foundation between figure 2 and 3).

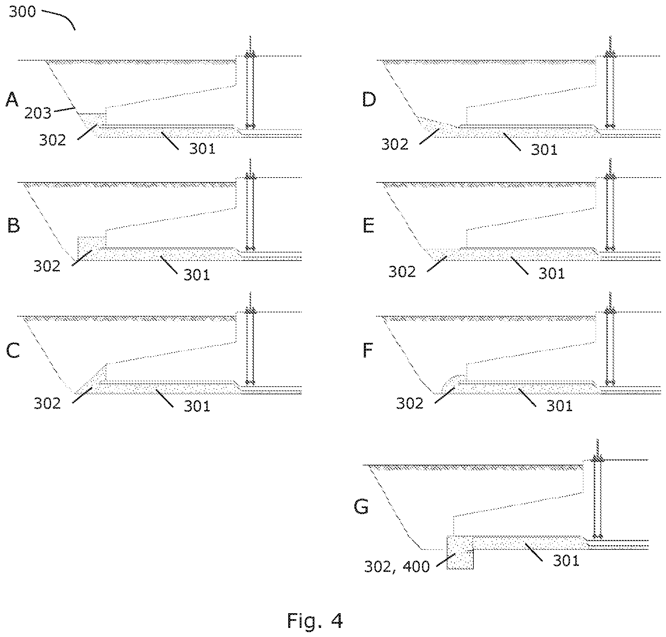

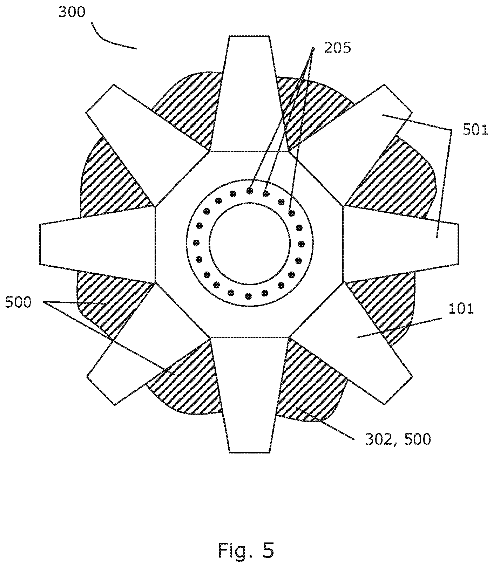

The reservoir volume 302 may be of different geometrical shapes as illustrated in figure 3 and in the figures 4 A-G, and figure 5.

In figures 3 and 4 A-C and F, the reservoir volume 302 extends a height 305 up against an outer peripheral side 307 of the slab foundation 101. In the embodiments of figures 3 and 4A-F, the reservoir volume 302 is placed as radially extending the drainage layer 301 some width distance 306 in the radial direction.

The reservoir volume 302 may in embodiments have a radial width 306 in the range of 0.2-3 m, such as in the range of 0.3-1.5 m or 0.4-0.7 m such as approximately 0.5 m. Also, the height 305 of the reservoir volume 302 is in the range of 0.2-1.2 m, such as in the range of 0.4-0.7 m such as approximately 0.5 m.

As can be seen from the figures, the reservoir volume 302 may be of gradual increasing or decreasing height 305 in the radial direction and may extend all the way out to the soil side 203 of the excavation (figures 3, 4A, or 4D-E). In the embodiment shown in figure 4G, the reservoir volume 302 comprises a ditch 400 arranged at least partly below the drainage layer 301. The ditch extends (in and out of the paper) at least partly along the peripheral portion of the drainage layer.

Figure 5 illustrates an embodiment of a foundation system 300 according to an embodiment of the invention as seen from above, wherein the slab foundation 101 is of star-shaped cross section with a number of tips or fingers 501 extending in different radial directions. In this embodiment the reservoir volume 302 comprises a number of sub volumes 500 placed at intervals along or near an outer periphery of the slab foundation. In this embodiment the sub volumes 500 can be placed without increasing the size or width of the excavation and the amount of soil which needs to be excavated. The number of sub volumes may e.g. be 2, 4 or 8.

In an embodiment of the invention, the first and second drainage material is essentially the same material.

In an embodiment of the invention, the first drainage material is different from the second drainage material.

In an embodiment of the invention, the foundation system further comprises a blinding layer (201) of a concrete material placed between the drainage layer and the slab foundation.

## Claims

1. An onshore foundation system supporting a wind turbine comprising a nacelle (103) and a rotor (104) supported by a tower (105), the foundation system comprising,
- a slab foundation (101) configured for supporting the tower, the nacelle, and the rotor, the slab foundation having a cross sectional area in a horizontal plane larger than a cross sectional area of the tower, and being placed at an excavation level (107), **characterized by**
- a drainage layer (301) of a first drainage material, the drainage layer extending underneath the slab foundation such as to allow any groundwater to permeate through the layer, the drainage layer comprising a peripheral portion (303) extending along a periphery of the drainage layer,
- a reservoir volume (302) of a second drainage material, the reservoir volume being placed in fluid communication with at least a part of the peripheral portion of the drainage layer to allow a fluid flow of any groundwater between the drainage layer and the reservoir volume, wherein a ratio between the reservoir volume and the volume of the drainage layer is in the range of 1/10 - 2, and wherein the first and second drainage material are gravel with a grain size **characterized by** a d₅₀ in the range of 5-40 mm, such as in the range of 10-30 mm, and wherein the first drainage material is the same or different to the second drainage material.

2. A foundation system according to claim 1, wherein the reservoir volume comprises at least one selected from the group consisting of a volume placed circumferentially to the slab foundation such as to extend a width (306) in a radial direction of at least 0.2 m out relative to an outer peripheral side (307) of the slab foundation, and a volume (302) having a height (305) of at least 0.1 m more than the height of the drainage layer (304).

3. A foundation system according to claim 1 or 2, wherein the reservoir volume is placed circumferentially to at least part of the slab foundation such as to extend a width (306) in a radial direction in the range of 0.2-3 m, such as in the range of 0.3-0.7 m, out relative to said outer peripheral side (307) of the slab foundation.

4. A foundation system according to any of the preceding claims, wherein the reservoir volume (302) has a height (305) in the range of 0.2-1.2 m, such as in the range of 0.4-0.7 m.

5. A foundation system according to any of the preceding claims, wherein the reservoir volume (302) has a height (305) of at least 0.1 m more than the height of the drainage layer (304), such as more than 0.2 m or more than 0.3 m.

6. A foundation system according to any of the preceding claims, wherein the reservoir volume comprises a ditch (400) at least partly below the drainage layer, the ditch extending at least partly along the peripheral portion of the drainage layer.

7. A foundation system according to any of the preceding claims, wherein the reservoir volume comprises a plurality, such as at least 4, of sub volumes placed at intervals along an outer periphery of the slab foundation.

8. A foundation system according to any of the preceding claims, wherein the reservoir volume has a volume in the range of 0.04 - 1.5 m³ per meter in a peripheral direction of the slab, such as in the range of 0.1- 1.0 m³ per m, such as around 0.2-0.3 m³ per m.

9. A foundation system according to any of the preceding claims, further comprising a backfilling volume at least partially filling up the excavation above and around the slab foundation.

10. A method of making a wind turbine foundation at an onshore site, to support a wind turbine comprising a nacelle (103) and a rotor (104) supported by a tower (105), the method comprising steps of
- removing the soil down to an excavation level (107) below the groundwater level at the site;
- forming a drainage layer (301) of a first drainage material at the excavation level, the drainage layer having a permeability higher than the soil at the excavation level, such as to allow any groundwater to permeate through the drainage layer, the drainage layer comprising a peripheral portion (303) extending along a periphery of the drainage layer; wherein a ratio between a reservoir volume and the volume of the drainage layer is in the range of 1/10 - 2, and wherein the first and/or second drainage materials are gravel with a grain size **characterized by** a d₅₀ in the range of 5-40 mm, such as in the range of 10-30 mm, and wherein the first drainage material is the same or different to the second drainage material
- placing a slab foundation (101) configured for supporting the tower and the nacelle;
- forming a reservoir volume (302) of a second drainage material, the reservoir volume being placed in fluid communication with at least a part of the peripheral portion of the drainage layer to allow a fluid flow of any groundwater between the drainage layer and the reservoir volume; and
- backfilling the excavation above and around the base of the slab foundation.

11. A method according to claim 10, wherein the forming of the reservoir volume is performed after placing the slab foundation.

12. A method according to claim 10, wherein the forming of the reservoir volume is performed before placing the slab foundation and before forming the drainage layer.

13. A method according to any of claims 10-12, wherein the soil first excavated is re-used in the backfilling of the excavation.

## Patentansprüche

1. Landwärtiges Gründungssystem, das eine Windkraftanlage stützt, die eine Gondel (103) und einen Rotor (104) umfasst, die von einem Turm (105) gestützt werden, wobei das Gründungssystem Folgendes umfasst:
- eine Plattengründung (101), die dazu ausgelegt ist, den Turm, die Gondel und den Rotor zu stützen, wobei die Plattengründung eine Querschnittfläche in einer horizontalen Ebene aufweist, die größer als eine Querschnittfläche des Turms ist und auf einem Aushubniveau (107) platziert ist, **gekennzeichnet durch**
- eine Entwässerungsschicht (301) aus einem ersten Entwässerungsmaterial, wobei sich die Entwässerungsschicht unterhalb der Plattengründung erstreckt, um jeglichem Grundwasser zu ermöglichen, durch die Schicht durchzudringen, wobei die Entwässerungsschicht einen Umfangsabschnitt (303) umfasst, der sich entlang eines Umfangs der Entwässerungsschicht erstreckt,
- ein Speichervolumen (302) eines zweiten Entwässerungsmaterials, wobei das Speichervolumen in strömungstechnischer Kommunikation mit zumindest einem Teil des Umfangsabschnitts der Entwässerungsschicht platziert ist, um einen Fluidstrom jeglichen Grundwassers zwischen der Entwässerungsschicht und dem Speichervolumen zu ermöglichen, wobei ein Verhältnis zwischen dem Speichervolumen und dem Volumen der Entwässerungsschicht in der Spanne von 1/10 - 2 liegt und wobei das erste und das zweite Entwässerungsmaterial Schotter mit einer Korngröße sind, die durch einen d₅₀ in der Spanne von 5-40 mm gekennzeichnet ist, wie in der Spanne von 10-30 mm, und wobei das erste Entwässerungsmaterial dasselbe wie oder ein anderes als das zweite Entwässerungsmaterial ist.

2. Gründungssystem nach Anspruch 1, wobei das Speichervolumen zumindest eines umfasst, das aus der Gruppe ausgewählt ist, die aus einem umlaufend um die Plattengründung platzierten Volumen, um sich um eine Breite (306) in einer radialen Richtung von zumindest 0,2 m relativ zu einer Außenumfangseite (307) der Plattengründung nach außen zu erstrecken, und einem Volumen (302), das eine Höhe (305) von zumindest 0,1 m mehr als die Höhe der Entwässerungsschicht (304) aufweist, besteht.

3. Gründungssystem nach Anspruch 1 oder 2, wobei das Speichervolumen umlaufend um zumindest einen Teil der Plattengründung platziert ist, um sich um eine Breite (306) in einer radialen Richtung in der Spanne von 0,2-3 m, wie in der Spanne von 0,3-0,7 m, relativ zu der Außenumfangseite (307) der Plattengründung nach außen zu erstrecken.

4. Gründungssystem nach einem der vorstehenden Ansprüche, wobei das Speichervolumen (302) eine Höhe (305) in der Spanne von 0,2-1,2 m, wie in der Spanne von 0,4-0,7 m, aufweist.

5. Gründungssystem nach einem der vorstehenden Ansprüche, wobei das Speichervolumen (302) eine Höhe (305) von zumindest 0,1 m mehr als die Höhe der Entwässerungsschicht (304), wie mehr als 0,2 m oder mehr als 0,3 m, aufweist.

6. Gründungssystem nach einem der vorstehenden Ansprüche, wobei das Speichervolumen eine Senke (400) umfasst, die sich zumindest teilweise unter der Entwässerungsschicht befindet, wobei sich die Senke zumindest teilweise entlang des Umfangsabschnitts der Entwässerungsschicht erstreckt.

7. Gründungssystem nach einem der vorstehenden Ansprüche, wobei das Speichervolumen eine Vielzahl, wie zumindest 4, von Untervolumen umfasst, die bei Abständen entlang eines Außenumfangs der Plattengründung platziert sind.

8. Gründungssystem nach einem der vorstehenden Ansprüche, wobei das Speichervolumen ein Volumen in der Spanne von 0,04-1,5 m³ pro Meter in einer Umfangsrichtung der Platte, wie in der Spanne von 0,1-1,0 m³ pro Meter, wie etwa 0,2-0,3 m³ pro Meter aufweist.

9. Gründungssystem nach einem der vorstehenden Ansprüche, weiter umfassend ein Hinterfüllvolumen, das zumindest teilweise den Aushub über und um die Plattengründung auffüllt.

10. Verfahren zum Herstellen einer Windkraftanlagengründung bei einer landwärtigen Stelle, um eine Windkraftanlage zu stützen, die eine Gondel (103) und einen Rotor (104) umfasst, die von einem Turm (105) gestützt werden, wobei das Verfahren die Folgenden Schritte umfasst
- Entfernen der Erde hinunter zu einem Aushubniveau (107) unterhalb des Grundwasserspiegels an der Stelle;
- Bilden einer Entwässerungsschicht (301) aus einem ersten Entwässerungsmaterial auf dem Aushubniveau, wobei die Entwässerungsschicht eine höhere Durchlässigkeit als die Erde auf dem Aushubniveau aufweist, um jeglichem Grundwasser zu ermöglichen, durch die Entwässerungsschicht durchzudringen, wobei die Entwässerungsschicht einen Umfangsabschnitt (303) umfasst, der sich entlang eines Umfangs der Entwässerungsschicht erstreckt; wobei ein Verhältnis zwischen einem Speichervolumen und dem Volumen der Entwässerungsschicht in der Spanne von 1/10 - 2 liegt und wobei das erste und/oder das zweite Entwässerungsmaterial Schotter mit einer Korngröße, die durch einen d₅₀ in der Spanne von 5-40 mm, wie in der Spanne von 10-30 mm, gekennzeichnet ist, ist/sind und wobei das erste Entwässerungsmaterial dasselbe wie oder ein anderes als das zweite Entwässerungsmaterial ist;
- Platzieren einer Plattengründung (101), die dazu ausgelegt ist, den Turm und die Gondel zu stützen;
- Bilden eines Speichervolumens (302) eines zweiten Entwässerungsmaterials, wobei das Entwässerungsvolumen in strömungstechnischer Kommunikation mit zumindest einem Teil des Umfangsabschnitts der Entwässerungsschicht platziert ist, um einen Fluidstrom jeglichen Grundwassers zwischen der Entwässerungsschicht und dem Speichervolumen zu ermöglichen; und
- Hinterfüllen des Aushubs über und um die Basis der Plattengründung.

11. Verfahren nach Anspruch 10, wobei das Bilden des Speichervolumens nach Platzieren der Plattengründung durchgeführt wird.

12. Verfahren nach Anspruch 10, wobei das Bilden des Speichervolumens vor Platzieren der Plattengründung und vor Bilden der Entwässerungsschicht durchgeführt wird.

13. Verfahren nach einem der Ansprüche 10-12, wobei die als erstes ausgehobene Erde beim Hinterfüllen des Aushubs wiederverwendet wird.

## Revendications

1. Système de fondations sur site terrestre supportant une éolienne comprenant une nacelle (103) et un rotor (104) supportés par une tour (105), le système de fondations comprenant :
- une fondation sur dalle (101) configurée pour supporter la tour, la nacelle et le rotor, la fondation sur dalle présentant une aire de section transversale dans un plan horizontal plus grande qu'une aire de section transversale de la tour, et étant aménagée à un niveau d'excavation (107), **caractérisé par**
- une couche de drainage (301) constituée d'un premier matériau de drainage, la couche de drainage s'étendant en dessous de la fondation sur dalle de façon à permettre à d'éventuelles eaux souterraines de passer à travers la couche, la couche de drainage comprenant une partie périphérique (303) s'étendant le long d'une périphérie de la couche de drainage,
- un volume de retenue (302) constitué d'un second matériau de drainage, le volume de retenue étant placé en communication fluidique avec au moins une partie de la partie périphérique de la couche de drainage pour permettre un écoulement fluide d'éventuelles eaux souterraines entre la couche de drainage et le volume de retenue, dans lequel un rapport entre le volume de retenue et le volume de la couche de drainage se situe dans la plage de 1/10 - 2, et dans lequel les premier et second matériaux de drainage sont du gravier présentant une granulométrie **caractérisée par** un d₅₀ se situant dans la plage de 5-40 mm, par exemple dans la plage de 10-30 mm, et dans lequel le premier matériau de drainage est identique ou différent du second matériau de drainage.

2. Système de fondations selon la revendication 1, dans lequel le volume de retenue comprend au moins un volume choisi dans le groupe constitué par un volume placé de manière circonférentielle à la fondation sur dalle de façon à s'étendre sur une largeur (306) dans une direction radiale d'au moins 0,2 m vers l'extérieur par rapport à un côté périphérique extérieur (307) de la fondation sur dalle, et un volume (302) présentant une hauteur (305) d'au moins 0,1 m de plus que la hauteur de la couche de drainage (304).

3. Système de fondations selon la revendication 1 ou 2, dans lequel le volume de retenue est placé de manière circonférentielle à au moins une partie de la fondation sur dalle de façon à s'étendre sur une largeur (306) dans une direction radiale dans la plage de 0,2-3 m, par exemple dans la plage de 0,3-0,7 m, vers l'extérieur par rapport audit côté périphérique extérieur (307) de la fondation sur dalle.

4. Système de fondations selon l'une quelconque des revendications précédentes, dans lequel le volume de retenue (302) présente une hauteur (305) dans la plage de 0,2-1,2 m, par exemple dans la plage de 0,4-0,7 m.

5. Système de fondations selon l'une quelconque des revendications précédentes, dans lequel le volume de retenue (302) présente une hauteur (305) d'au moins 0,1 m de plus que la hauteur de la couche de drainage (304), par exemple de plus de 0,2 m ou de plus de 0,3 m.

6. Système de fondations selon l'une quelconque des revendications précédentes, dans lequel le volume de retenue comprend une fouille (400) au moins partiellement en dessous de la couche de drainage, la fouille s'étendant au moins partiellement le long de la partie périphérique de la couche de drainage.

7. Système de fondations selon l'une quelconque des revendications précédentes, dans lequel le volume de retenue comprend une pluralité, par exemple au moins 4, de sous-volumes placés à des intervalles le long d'une périphérie extérieure de la fondation sur dalle.

8. Système de fondations selon l'une quelconque des revendications précédentes, dans lequel le volume de retenue présentant un volume dans la plage de 0,04-1,5 m³ par mètre dans une direction périphérique de la dalle, par exemple dans la plage de 0,1-1,0 m³ par m, par exemple autour de 0,2-0,3 m³ par m.

9. Système de fondations selon l'une quelconque des revendications précédentes, comprenant en outre un volume de remblayage remplissant au moins partiellement l'excavation au-dessus et autour de la fondation sur dalle.

10. Procédé de réalisation d'une fondation d'éolienne sur un site terrestre, pour supporter une éolienne comprenant une nacelle (103) et un rotor (104) supportés par une tour (105), le procédé comprenant les étapes consistant à
- dégager le sol jusqu'à un niveau d'excavation (107) en dessous du niveau des eaux souterraines sur le site ;
- former une couche de drainage (301) constituée d'un premier matériau de drainage au niveau de l'excavation, la couche de drainage présentant une perméabilité supérieure au sol au niveau de l'excavation, de façon à permettre à d'éventuelles eaux souterraines de passer à travers la couche de drainage, la couche de drainage comprenant une partie périphérique (303) s'étendant le long d'une périphérie de la couche de drainage ; dans lequel un rapport entre un volume de retenue et le volume de la couche de drainage se situe dans la plage de 1/10-2, et dans lequel les premier et second matériaux de drainage sont du gravier présentant une granulométrie **caractérisée par** un d₅₀ se situant dans la plage de 5-40 mm, par exemple dans la plage de 10-30 mm, et dans lequel le premier matériau de drainage est identique ou différent du second matériau de drainage ;
- aménager une fondation sur dalle (101) configurée pour supporter la tour et la nacelle ;
- former un volume de retenue (302) constitué d'un second matériau de drainage, le volume de retenue étant placé en communication fluidique avec au moins une partie de la partie périphérique de la couche de drainage pour permettre un écoulement fluide d'éventuelles eaux souterraines entre la couche de drainage et le volume de retenue ; et
- remblayer l'excavation au-dessus et autour de la base de la fondation sur dalle.

11. Procédé selon la revendication 10, dans lequel la formation du volume de retenue est réalisée après l'aménagement de la fondation sur dalle.

12. Procédé selon la revendication 10, dans lequel la formation du volume de retenue est réalisée avant l'aménagement de la fondation sur dalle et avant la formation de la couche de drainage.

13. Procédé selon l'une quelconque des revendications 10-12, dans lequel le sol excavé au préalable est réutilisé dans le remblayage de l'excavation.
